# FASCICULE DE BREVET EUROPEEN

(11) **EP 1 797 751 B1**
(45) Date de publication et mention de la délivrance du brevet: **29.07.2009**
(21) Numéro de dépôt: 06291900.6
(22) Date de dépôt: 11.12.2006
(51) Int. Cl.: A01C 3/06

(54) **Epandeur**
Verteilmaschine
Spreader

(30) Priorité: 16.12.2005 FR 0512805
(43) Date de publication de la demande: 20.06.2007
(73) Titulaire: CENTRE NATIONAL DU MACHINISME AGRICOLE, DU GENIE RURAL, DES EAUX ET DES FORETS (CEMAGREF), 92160 Antony (FR)
(72) Inventeur: Piron, Emmanuel, 03300 Creuzier le Vieux (FR); Miclet, Denis, 03150 Montoldre (FR)
(74) Mandataire: Laget, Jean-Loup

(56) Documents cités:
- EP-A- 0 858 729
- EP-A- 1 082 891
- DE-U1- 20 202 601

## Description

La présente invention a pour objets un épandeur et un procédé de contrôle du débit massique d'un produit à épandre éjecté d'un épandeur.

L'épandage des matières organiques de type fumier, compost ou cocompost est généralement réalisé au moyen d'épandeurs.

Afin de faciliter leur réglage et de permettre un contrôle plus précis des quantités de produits épandus, les épandeurs sont de plus en plus dotés de moyens de commande électroniques. Les moyens de commande peuvent notamment commander un dispositif hydraulique d'entraînement d'un tapis mouvant disposé au fond de l'épandeur, de manière à régler la vitesse du tapis mouvant en fonction de la vitesse de l'épandeur, l'objectif étant d'obtenir la quantité souhaitée de produit en chaque point d'une parcelle.

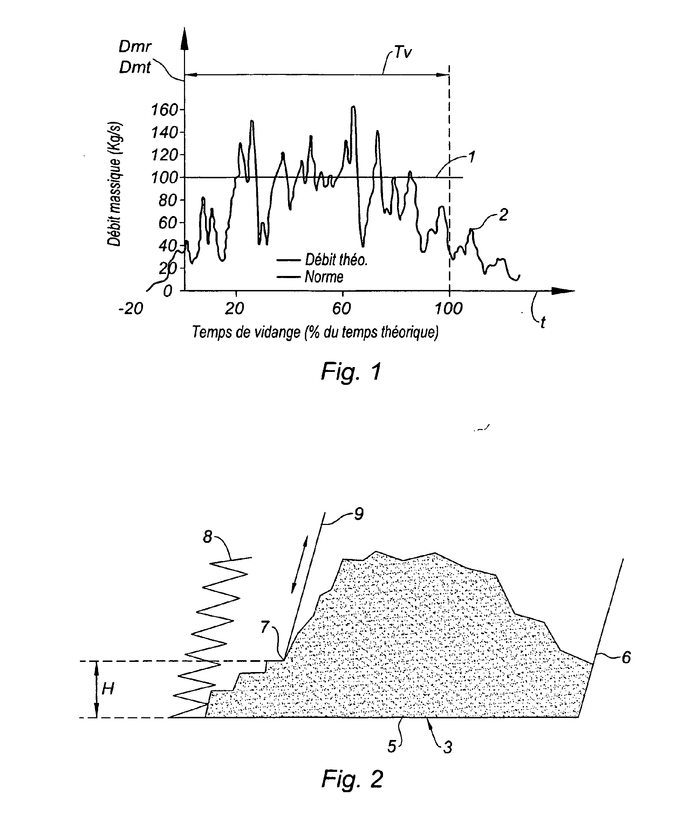

La figure 1 montre une courbe 1 représentant l'évolution théorique d'un débit massique Dmt d'un produit à épandre éjecté d'un épandeur en fonction du temps t. La courbe 1 correspond à ce qu'un opérateur souhaite obtenir, c'est-à-dire un épandage sensiblement constant pendant une durée Tv correspondant à un temps de vidange théorique. Une courbe 2 représente l'évolution réelle du débit massique Dmr lors de l'épandage d'un produit tel que du cocompost par un épandeur de l'art antérieur. La courbe 2 présente de fortes variations par rapport à la courbe 1, en particulier en début et fin de vidange. Le début réel de la vidange est antérieur à l'instant théorique et la fin réelle de la vidange est postérieure à l'instant théorique, ce qui a pour effet un débit massique réel Dmr plus faible que souhaité. En outre, des variations de la valeur instantanée du débit massique Dmr sont dues notamment à des éboulements de produit vers des organes d'éparpillage de l'épandeur.

Les quantités de produit épandues sur la parcelle sont directement affectées par ces défauts de courbes de débit. Ainsi, l'ajustement de la vitesse de déplacement du tapis mouvant en fonction de la vitesse de l'épandeur n'est pas suffisamment efficace si elle n'est pas combinée avec un contrôle du débit massique. Actuellement, plusieurs méthodes sont connues pour contrôler le débit massique.

Une première méthode consiste à utiliser un indicateur de couple consommé par les organes d'éparpillage, ce couple étant fortement corrélé au débit massique. Cependant, cette méthode présente l'inconvénient que la fonction de corrélation varie pour chaque type de produit. De plus, les mesures étant effectuées au moment où le produit est épandu, l'information relative à une variation de débit massique n'est disponible qu'après l'épandage, ce qui limite l'efficacité du contrôle.

Une deuxième méthode consiste à utiliser un volet de pesage pour peser une « tranche » de produit juste avant son passage dans les organes d'éparpillage. Cette méthode a pour inconvénient un manque de fiabilité, du fait de l'effet de voûte du produit sur les parois de l'épandeur, qui entraîne un pesage partiel du produit en déplacement dans la caisse de l'épandeur.

Une troisième méthode consiste à utiliser un pesage dit global, c'est à dire à extraire l'information de débit massique de celle du poids total du produit présent dans la caisse de l'épandeur à chaque instant. Cette méthode permet d'obtenir une information fiable de la masse de produit épandue à chaque instant. Cependant, cette méthode présente l'inconvénient de présenter un retard lors de la régulation du fait de la nécessité d'un filtrage important, notamment à cause des accélérations dynamiques et des variations de densité de produit.

Ainsi, aucune de ces méthodes ne donne satisfaction en ce qui concerne la régulation du débit massique.

Un épandeur comportant les caractéristiques du préambule de la revendication 1 et utilisant le procédé selon le préambule de la revendication 12 est connu de EP-A-0858729.

La présente invention a pour but de proposer un épandeur qui évite au moins certains des inconvénients précités et qui permette un contrôle efficace du débit massique, ainsi qu'un procédé de contrôle du débit massique d'un produit à épandre éjecté d'un épandeur.

A cet effet, l'invention a pour objet un épandeur comportant les caractéristiques de la revendication 1.

Avantageusement, ledit paramètre caractéristique est relatif à la hauteur de produit à proximité de ladite zone d'ouverture.

De préférence, lesdits moyens de détermination d'un paramètre caractéristique comprennent des moyens de mesure de force d'une force exercée par ledit produit sur lesdits moyens d'obturation.

Selon un mode de réalisation de l'invention, lesdits moyens de mesure de force comportent un ensemble de capteurs comprenant au moins un capteur de type analogique.

Selon un mode de réalisation de l'invention, lesdits moyens d'obturation comprennent une porte supportée et maintenue en position par des moyens d'actionnement de la porte liés à ladite caisse, lesdits moyens de mesure de force étant aptes à mesurer une force exercé sur lesdits moyens d'actionnement.

Selon un mode de réalisation de l'invention, les moyens d'obturation comprennent une porte montée coulissante dans des glissières solidaires de ladite caisse, les moyens de mesure de force étant aptes à mesurer une force exercée par ladite porte sur lesdites glissières.

Selon un mode de réalisation de l'invention, les moyens d'obturation comprennent une porte, la partie inférieure de la porte comportant un dispositif articulé, ladite porte comportant un support de capteur apte à bloquer une rotation dudit dispositif articulé, lesdits moyens de mesure de force étant aptes à mesurer une force exercée par ledit produit à épandre sur ledit dispositif articulé.

Selon un mode de réalisation de l'invention, lesdits moyens de mesure de force comportent un ensemble de capteurs comprenant au moins un capteur de type booléen.

Selon un mode de réalisation de l'invention, les moyens d'obturation comprennent une porte, la partie inférieure de la porte comportant un dispositif articulé, ladite porte comportant un support de capteur apte à bloquer une rotation dudit dispositif articulé, un dispositif mécanique apte à être comprimé étant disposé entre ledit dispositif articulé et ledit support de capteur, lesdits moyens de mesure de force étant aptes à transmettre un signal dont la valeur indique si ledit dispositif mécanique et comprimé ou non.

Avantageusement, l'épandeur comprend des moyens de mémorisation aptes à mémoriser la distance entre lesdits moyens d'obturation et des organes d'éparpillage de l'épandeur, de manière que le réglage de la vitesse du tapis mouvant tienne compte du décalage entre l'instant de détermination du paramètre caractéristique d'une portion du produit et l'instant de l'éjection de la portion du produit de l'épandeur.

De préférence, l'épandeur comporte des moyens de pesage aptes à peser le produit à épandre contenu dans la caisse, et des moyens d'entrée pour entrer un volume de produit à épandre présent dans la caisse, l'épandeur comportant une unité de contrôle aptes à déterminer la masse volumique du produit à épandre en fonction de la masse du produit à épandre et du volume du produit à épandre.

L'invention a également pour objet un procédé de contrôle du débit massique d'un produit à épandre éjecté d'un épandeur, ledit épandeur comportant une caisse destinée à contenir le produit à épandre, ladite caisse comprenant une zone d'ouverture apte à permettre l'éjection dudit produit à épandre de ladite caisse, ledit épandeur comportant un tapis mouvant, disposé dans ladite caisse, apte à déplacer au moins une portion dudit produit à épandre en direction de ladite zone d'ouverture, et des moyens d'obturation de la zone d'ouverture aptes à obturer au moins partiellement ladite zone d'ouverture, caractérisé en ce qu'il comporte les étapes consistant à :
- déterminer un paramètre caractéristique d'une portion du produit à épandre disposée à proximité de ladite zone d'ouverture,
- commander un déplacement desdits moyens d'obturation pour régler la surface d'ouverture de ladite zone d'ouverture en fonction dudit paramètre caractéristique, et
- régler la vitesse dudit tapis mouvant en fonction de ladite surface d'ouverture et d'un débit massique souhaité prédéfinit du produit à épandre.

L'invention sera mieux comprise, et d'autre buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.
Sur ces dessins :
- la figure 1 est un graphique représentant deux courbes montrant l'évolution, respectivement, du débit massique théorique et du débit massique réel, en fonction du temps, avec un épandeur de l'art antérieur ;
- la figure 2 est une vue partielle schématique et simplifiée en coupe longitudinale d'un épandeur selon un mode de réalisation de l'invention ;
- la figure 3 est une vue similaire à la figure 2 montrant plus en détail la porte de l'épandeur ;
- la figure 4 est un schéma représentant des échanges de données entre le calculateur de l'épandeur, des capteurs disposés dans l'épandeur et des moyens d'entrée de données ;
- la figure 5 est une vue similaire à la figure 3 montrant un deuxième mode de réalisation de l'invention ;
- la figure 6 est une vue similaire à la figure 3 montrant un troisième mode de réalisation de l'invention ;
- la figure 7 est une vue similaire à la figure 3 montrant un quatrième mode de réalisation de l'invention ; et
- la figure 8 un graphique représentant une série de courbes montrant l'évolution du débit massique en fonction du temps, en l'absence de contrôle du débit massique, avec un contrôle du débit massique et avec un contrôle du débit massique combiné avec un contrôle de la masse volumique du produit à épandre.

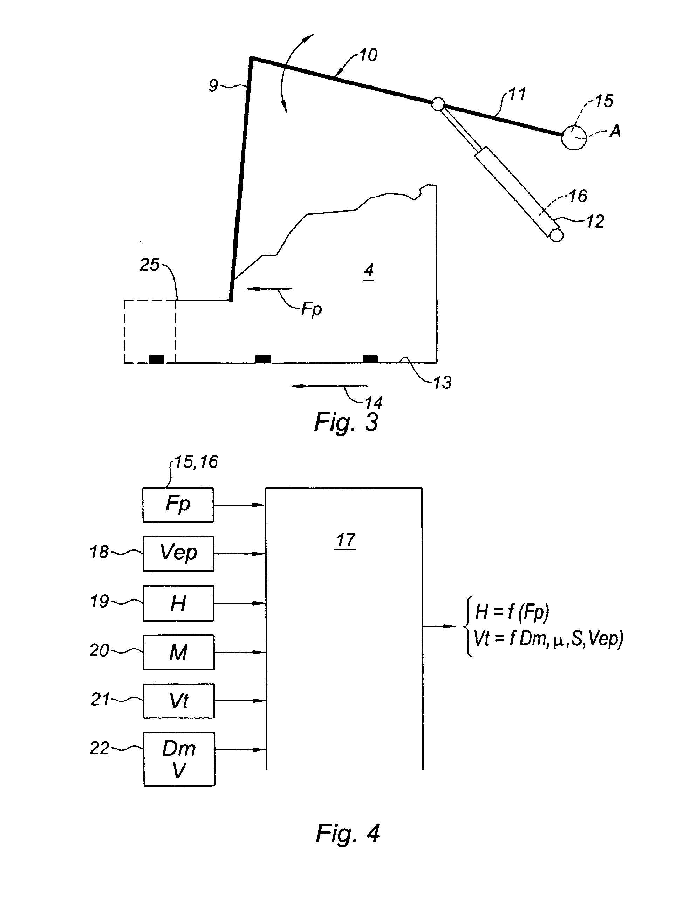

En se référant aux figures 2 et 3, on voit une caisse 3 d'un épandeur. La caisse 3 contient un produit à épandre 4, par exemple du fumier, du compost ou du cocompost. La caisse 3 est fermée sur sa face inférieure 5, sa face avant 6, et ses deux faces latérales (non représentées), et est ouverte sur sa face arrière qui constitue une ouverture 7 pour l'éjection du produit 4. Des organes d'éparpillage 8 sont disposés au niveau de l'ouverture.

L'ouverture 7 est apte à être fermée totalement ou partiellement par une porte 9, disposée en amont des organes d'éparpillage 8. La porte 9 est maintenue en position par des moyens d'actionnement 10 de la porte, qui comprennent une partie 11 mobile en rotation autour d'un axe A, et un vérin 12.

Un tapis mouvant 13, disposé sur la face inférieure 5 de la caisse 3, sous le produit à épandre 4, est apte à se déplacer dans le sens de la flèche 14, c'est-à-dire en direction de l'ouverture 7.

Des capteurs de force 15 et 16, disposés au niveau de l'axe A et dans le vérin 12, par exemple, permettent des mesures de la force Fp exercé par le produit 4 sur la porte 9. On notera que cette disposition des capteurs de force 15, 16 permet de réaliser une mesure totale de la force qui s'applique sur la porte 9. Les capteurs 15, 16 peuvent être par exemple des capteurs d'effort classiques de type à réponse analogique, des barreaux de mesure d'effort, ou des capteurs de pression.

Les mesures effectuées par les capteurs 15, 16 sont transmises à un calculateur 17 (figure 4) de l'épandeur. Le calculateur 17 reçoit également :
- des données relatives à la vitesse de l'épandeur Vep, provenant d'un capteur de vitesse de l'épandeur 18,
- des données relatives à la hauteur H de la porte 9 d'un capteur de position de la porte 19, qui est par exemple disposé dans le vérin 12,
- des données relatives à la masse totale M du produit 4 provenant de moyens de pesage 20
- des données relatives à la vitesse Vt du tapis 13, provenant d'un capteur de vitesse du tapis 21.

Le calculateur est connecté à des moyens d'entrée 22, qui comprennent par exemple un clavier, pour permettre à un opérateur d'entrer des paramètres d'épandage, tel que cela sera décrit en détail plus loin.

On va maintenant décrire le fonctionnement de l'épandeur selon le premier mode de réalisation.

Lorsque l'opérateur souhaite réaliser l'épandage d'un produit, par exemple du fumier, sur une parcelle, il mémorise dans le calculateur 17, par le biais des moyens d'entrée 22, le débit massique Dmt souhaité et le volume V de produit 4 chargé dans la caisse 3.

Le calculateur 17 calcule, à partir de la masse M du produit, mesurée par les moyens de pesage 20, et du volume V du produit, entré par l'utilisateur, la masse volumique µ du produit.

Pendant l'épandage, les capteurs de force 15, 16 transmettent au calculateur 17 des mesures de force Fp exercée par le produit 4 sur la porte 9. Par comparaisons avec des seuils ou des plages de forces prédéfinis, le calculateur 17 détermine une hauteur H adaptée de la porte et commande un déplacement du vérin 12. La hauteur H adaptée est par exemple choisie telle que la porte 9 arase le produit 4 de quelques centimètres. Ainsi, la force Fp exercée par le produit 4 sur la porte 9 étant directement lié à la hauteur Hp du produit 4 présent à proximité de la porte 9, ce système permet d'adapter automatiquement la hauteur H de la porte à une caractéristique de la portion de produit se trouvant à proximité de la porte.

Lorsque la hauteur H adaptée a été déterminée, le calculateur 17 calcule la surface d'ouverture S de la caisse 3, c'est-à-dire la surface par laquelle le produit 4 peut sortir de l'épandeur. Pour cela, le profil de la caisse, notamment sa largeur, est mémorisé préalablement dans le calculateur 17. La surface S est ainsi connue de manière fiable et mesurable par un simple capteur de position de porte, peu onéreux et dont le signal ne nécessite pas de filtrage.

Lorsque la surface S a été calculée, le calculateur 17 en déduit la vitesse Vt à appliquer au tapis, en fonction du débit massique souhaité Dmt, de la surface d'ouverture S et de la masse volumique µ.

Ainsi, le débit massique réel Dmr, qui dépend de la vitesse Vep de l'épandeur, de la masse volumique µ du produit 4, de la vitesse Vt du tapis et de la surface S peut être réguler pour rester proche du débit massique souhaité Dmt.

On notera que la porte 9, en suivant le profil « naturel » de répartition du produit 4 dans la caisse 3, freine de façon légère l'écoulement de ce dernier. Ceci permet de générer une surface supérieure 25 sensiblement plane, ce qui permet d'avoir une surface S qui correspond à la surface réellement utilisée pour l'éjection du produit, sans générer de vitesse relative du produit 4 par rapport au tapis 13. Ce simple arasement permet un fonctionnement optimum, à la fois lors d'épandages de produits de forte cohésion (fumier) pour lesquels une fermeture importante génèrerait des variations de vitesse du produit dans la caisse, et donc un débit irrégulier, et lors d'épandages de produits de faible cohésion (compost et cocompost), pour lesquels la porte 9 a un effet très positif contre les éboulements vers les organes d'éparpillage 8.

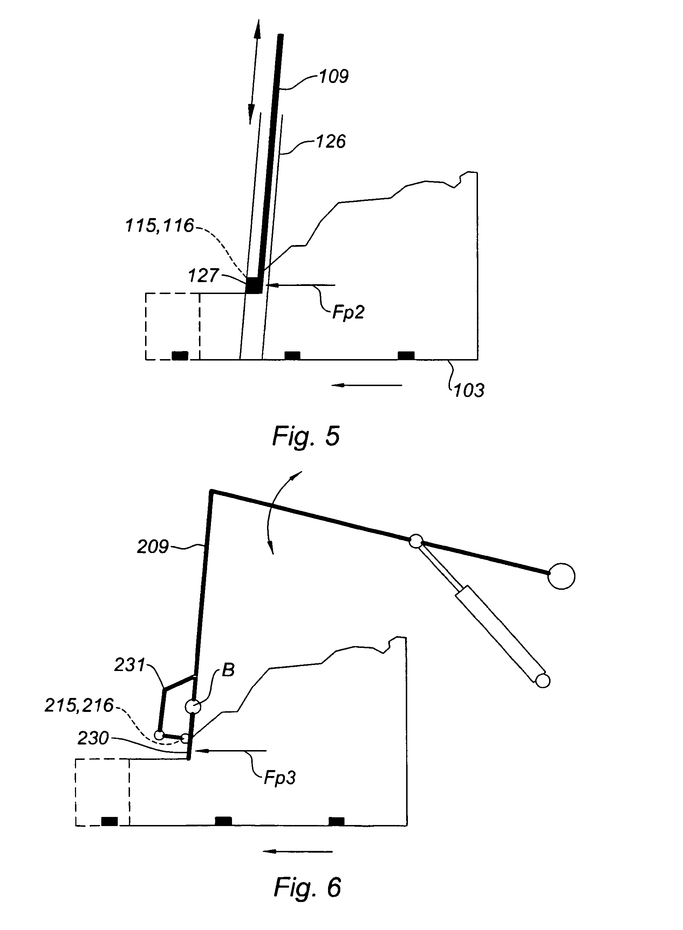

En se référant à la figure 5, on va maintenant décrire un deuxième mode de réalisation de l'invention. Les éléments de l'épandeur identiques au premier mode de réalisation sont désignés par le même chiffre de référence augmenté de 100 et ne sont pas décrits à nouveau. Ici, la porte 109 et une porte dite guillotine, qui est montée coulissante entre deux glissières 126, dont une seule est visible sur la figure 4, disposées dans le profil de la caisse 103. Les capteurs de force 115, 116 sont disposés dans un patin d'appui 127 de la porte 109, en contact avec chacune des glissières 126. Les capteurs de force 115, 116 mesurent dans ce cas une force Fp2 d'appui de la porte 109 sur les glissières 126.

Le fonctionnement selon le deuxième mode de réalisation est similaire au fonctionnement selon le premier mode de réalisation.

En se référant à la figure 6, on va maintenant décrire un troisième mode de réalisation de l'invention. Les éléments de l'épandeur identiques au premier mode de réalisation sont désignés par le même chiffre de référence augmenté de 200 et ne sont pas décrits à nouveau. Ici, la partie inférieure de la porte 209 est munie d'un dispositif articulé 230, par exemple de type volet, mobile en rotation autour d'un axe B. Les capteurs de force 215, 216 sont fixés sur des supports de capteurs de force 231. Les supports de capteur 231 ont par exemple une section sensiblement en forme de C, l'extrémité libre de la barre inférieure du C se trouvant en contact avec le dispositif articulé 230, de manière à bloquer en rotation le dispositif articulé 230. Les capteurs 215, 216 mesurent dans ce cas la force Fp3 exercé par le produit sur le dispositif articulé 230.

Le fonctionnement selon le troisième mode de réalisation est similaire au fonctionnement selon le premier mode de réalisation.

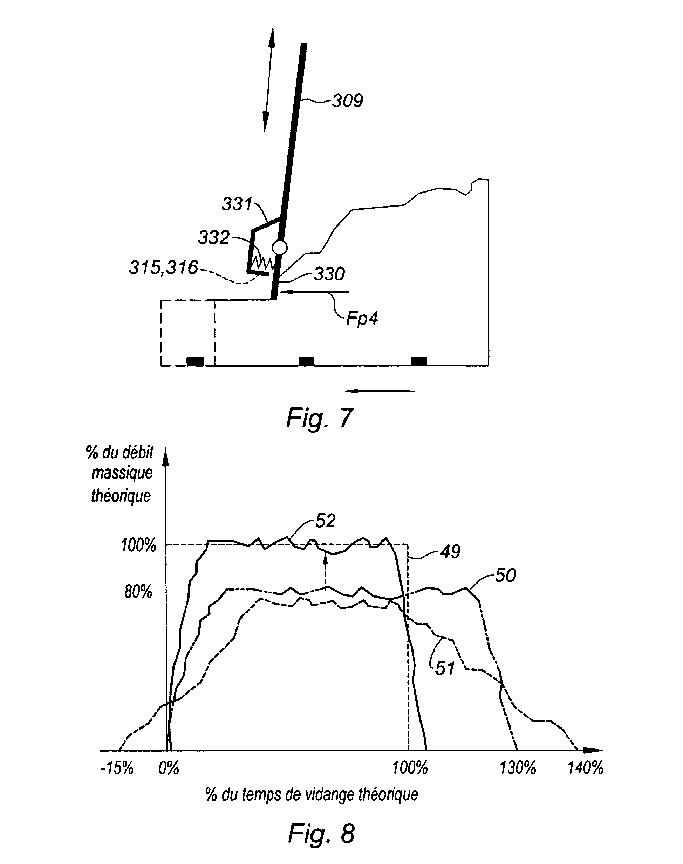

En se référant à la figure 7, on va maintenant décrire un quatrième mode de réalisation de l'invention. Les éléments de l'épandeur identiques au premier mode de réalisation sont désignés par le même chiffre de référence augmenté de 300 et ne sont pas décrits à nouveau. Ici, les capteurs de force 315, 316 sont de type booléens et permettent une réponse de type « tout ou rien ». Il s'agit par exemple de capteurs de type inductif ou a contact. La porte 309 comporte un dispositif articulé 330 et des supports de capteurs 331 identiques à ce qui a été décrit dans le troisième mode de réalisation. Un dispositif mécanique 332, par exemple à ressort ou hydraulique à accumulation, est disposé entre les supports de capteurs 331 et le dispositif articulé 330 pour opposer une résistance au dispositif articulé 330.

On va maintenant décrire le fonctionnement de l'épandeur selon le quatrième mode de réalisation de l'invention. Les capteurs 315, 316 émettent un signal dont la valeur est 1 ou 0 selon que la force Fp4 appliqué par le produit sur la porte 309 comprime ou non le ressort ou le mécanisme à accumulation 332. Le type de régulation est similaire aux modes de réalisation précédents, les seuils étant remplacés des seuils adaptés à une réponse binaire. Par exemple, lorsque les deux capteurs 315 et 316 émettent un signal de valeur 1, ce qui indique un dispositif 332 fortement comprimé, la hauteur H de la porte 309 est augmentée et la vitesse Vt du tapis est diminuée en conséquence. Lorsque les deux capteurs 315 et 316 émettent un signal de valeur 0, ce qui indique un dispositif faiblement comprimé, la hauteur H de la porte 309 est diminuée et la vitesse Vt du tapis est augmentée en conséquence. Et, lorsque les capteurs 315 et 316 ne donnent pas la même valeur, la hauteur H n'est pas modifiée.

D'autres variantes sont possibles. Par exemple, une plage de force peut être programmée de telle façon à ce que la porte ne soit pas en permanence en mouvement d'ouverture ou de fermeture, et un modèle de réponse hydraulique peut être intégré au calculateur pour tenir compte de la phase de vidange. En effet, en début de vidange, la mise en charge étant rapide à cet instant, le débit d'huile à envoyer aux vérins d'ouverture/fermeture de la porte doit pouvoir être important pour réagir vite. Au contraire, au milieu de la vidange, les variations de débit massique sont plus faibles, les variations de niveau d'ouverture de la porte ne doivent donc pas être aussi importantes et le débit hydraulique d'alimentation pourra être plus faible. En fin de vidange les variations de hauteur de front du produit dans la caisse peuvent à nouveau être importantes, il est donc possible d'alimenter les vérins d'ouverture de porte avec un débit plus élevé afin de bien suivre les variations de hauteur de front.

Le procédé peut tenir compte de l'historique des hauteurs H de porte et de la distance entre la porte et les organes d'éparpillage afin de modifier la vitesse Vt du tapis lorsque le volume mesuré de produit arrive réellement au niveau des organes d'éparpillage. De cette façon, la régulation de vitesse est réalisée au plus juste.

Dans la description des modes de réalisation précédents, la masse volumique µ du produit a été considérée connue et constante lors de la vidange. Cependant, ce paramètre peut subir des variations au sein d'une caisse chargée, ce qui peut entraîner des variations du débit massique réel Dmr par rapport au débit massique théorique Dmt. De plus, d'un épandeur à un suivant, la masse volumique peut changer. Pour compenser ces variations, il est possible de réaliser un ré étalonnage de la masse volumique µ par adjonction, par exemple, de cellules de charge sur l'épandeur. La connaissance d'une masse globale M est précise avec un tel dispositif. Le calculateur calcule dans ce cas la différence de masse entre deux instants espacés, par exemple, de 10 secondes ou plus. Le bruit mécanique n'est donc pas un problème et peut dans ce cas subir un filtrage non problématique. L'information de masse est dans ce cas simplement utilisée pour le ré étalonnage de la masse volumique µ et non pas pour la régulation en continu du débit massique Dmr. La pesée globale peut donc être simple, et utiliser par exemple des capteurs sur essieu et rotule d'attelage ou timon, sans double chassis. La figure 8 montre plusieurs courbes de débit massique réel Dmr comparé à une courbe 49 de débit massique théorique souhaité Dmt. La courbe 50 montre un cas de régulation du débit massique Dmr sans détermination de la masse volumique. La courbe 50 est lissée par rapport à une courbe 51 réalisée sans régulation, mais n'est pas au niveau de la courbe théorique 49 du fait d'un décalage entre la masse volumique utilisée et la masse volumique réelle. La courbe 52, réalisée avec une régulation du débit massique Dmr combinée avec un ré étalonnage, se rapproche donc plus de la courbe théorique 49.

Bien que l'invention ait été décrite en relation avec plusieurs modes de réalisations particuliers, il est bien évident qu'elle n'y est nullement limitée et qu'elle comprend tous les équivalents techniques des moyens décrits ainsi que leurs combinaisons si celles-ci entrent dans le cadre de l'invention telle que définie par les revendications.

## Revendications

1. Epandeur comportant une caisse (3) destinée à contenir un produit à épandre (4), ladite caisse comprenant une zone d'ouverture (7) apte à permettre l'éjection dudit produit à épandre de ladite caisse, ledit épandeur comportant un tapis mouvant (13), disposé dans ladite caisse, apte à déplacer au moins une portion dudit produit à épandre en direction de ladite zone d'ouverture, et des moyens de réglage de la vitesse (Vt) du tapis mouvant aptes à régler la vitesse dudit tapis mouvant, **caractérisé en ce qu'**il comporte :
- des moyens d'obturation (9, 10, 109, 126, 209, 309) de la zone d'ouverture aptes à obturer au moins partiellement ladite zone d'ouverture,
- des moyens de détermination (15, 16, 115, 116, 215, 216, 315, 316) d'un paramètre caractéristique d'une portion du produit à épandre disposée à proximité de ladite zone d'ouverture, et
- des moyens de réglage (12) d'une surface d'ouverture (S) aptes à commander un déplacement desdits moyens d'obturation (9) pour régler la surface d'ouverture de ladite zone d'ouverture en fonction dudit paramètre caractéristique,
lesdits moyens de réglage de la vitesse (Vt) du tapis mouvant étant aptes à régler la vitesse dudit tapis mouvant en fonction de ladite surface d'ouverture et d'un débit massique souhaité (Dmt) prédéfinit du produit à épandre.

2. Epandeur selon la revendication 1, **caractérisé en ce que** ledit paramètre caractéristique est relatif à la hauteur de produit à proximité de ladite zone d'ouverture (7).

3. Epandeur selon la revendication 1, **caractérisé en ce que** lesdits moyens de détermination d'un paramètre caractéristique comprennent des moyens de mesure de force d'une force exercée par ledit produit sur lesdits moyens d'obturation.

4. Epandeur selon la revendication 3, **caractérisé en ce que** lesdits moyens de mesure de force comportent un ensemble de capteurs (15, 16, 115, 116, 215, 216) comprenant au moins un capteur de type analogique.

5. Epandeur selon la revendication 4, **caractérisé en ce que** lesdits moyens d'obturation comprennent une porte (9) supportée et maintenue en position par des moyens d'actionnement (10) de la porte liés à ladite caisse, lesdits moyens de mesure de force (15, 16) étant aptes à mesurer une force (Fp) exercée sur lesdits moyens d'actionnement.

6. Epandeur selon la revendication 4, **caractérisé en ce que** les moyens d'obturation comprennent une porte (109) montée coulissante dans des glissières (126) solidaires de ladite caisse, les moyens de mesure de force (115, 116) étant aptes à mesurer une force (Fp2) exercée par ladite porte sur lesdites glissières.

7. Epandeur selon la revendication 4, **caractérisé en ce que** les moyens d'obturation comprennent une porte (209), la partie inférieure de la porte comportant un dispositif articulé (230), ladite porte comportant un support de capteur (231) apte à bloquer une rotation dudit dispositif articulé, lesdits moyens de mesure de force (215, 216) étant aptes à mesurer une force (Fp3) exercée par ledit produit à épandre sur ledit dispositif articulé.

8. Epandeur selon la revendication 3, **caractérisé en ce que** lesdits moyens de mesure de force (315, 316) comportent un ensemble de capteurs comprenant au moins un capteur de type booléen.

9. Epandeur selon la revendication 8, **caractérisé en ce que** les moyens d'obturation comprennent une porte (309), la partie inférieure de la porte comportant un dispositif articulé (330), ladite porte comportant un support de capteur (331) apte à bloquer une rotation dudit dispositif articulé, un dispositif mécanique (332) apte à être comprimé étant disposé entre ledit dispositif articulé et ledit support de capteur, lesdits moyens de mesure de force étant aptes à transmettre un signal dont la valeur indique si ledit dispositif mécanique et comprimé ou non.

10. Epandeur selon la revendication 1, **caractérisé en ce qu'**il comprend des moyens de mémorisation aptes à mémoriser la distance entre lesdits moyens d'obturation et des organes d'éparpillage de l'épandeur, de manière que le réglage de la vitesse (Vt) du tapis mouvant tienne compte du décalage entre l'instant de détermination du paramètre caractéristique d'une portion du produit et l'instant de l'éjection de la portion du produit de l'épandeur.

11. Epandeur selon la revendication 1, **caractérisé en ce qu'**il comporte des moyens de pesage (20) aptes à peser le produit à épandre contenu dans la caisse (3), et des moyens d'entrée (22) pour entrer un volume (V) de produit à épandre présent dans la caisse, l'épandeur comportant une unité de contrôle (17) aptes à déterminer la masse volumique (µ) du produit à épandre en fonction de la masse du produit à épandre et du volume du produit à épandre.

12. Procédé de contrôle du débit massique d'un produit à épandre (4) éjecté d'un épandeur, ledit épandeur comportant une caisse (3) destinée à contenir le produit à épandre, ladite caisse comprenant une zone d'ouverture (7) apte à permettre l'éjection dudit produit à épandre de ladite caisse, ledit épandeur comportant un tapis mouvant (13), disposé dans ladite caisse, apte à déplacer au moins une portion dudit produit à épandre en direction de ladite zone d'ouverture, et des moyens d'obturation (9, 10, 109, 126, 209, 309) de la zone d'ouverture aptes à obturer au moins partiellement ladite zone d'ouverture, **caractérisé en ce qu'**il comporte les étapes consistant à :
- déterminer un paramètre caractéristique d'une portion du produit à épandre disposée à proximité de ladite zone d'ouverture,
- commander un déplacement desdits moyens d'obturation pour régler la surface d'ouverture (S) de ladite zone d'ouverture en fonction dudit paramètre caractéristique, et
- régler la vitesse (Vt) dudit tapis mouvant en fonction de ladite surface d'ouverture et d'un débit massique souhaité prédéfinit du produit à épandre.

## Claims

1. Spreader comprising a case (3) intended to contain a product to be spread (4), said case comprising an opening (7) adapted to allow ejection of said product to be spread from said case, said spreader comprising a moving belt (13), arranged in said case, adapted to move at least a portion of said product to be spread in the direction of said opening, and moving belt speed (Vt) adjusting means adapted to adjust the speed of said moving belt, **characterised in that** it comprises:
- means (9, 10, 109, 126, 209, 309) for sealing the opening adapted to seal, at least partially, said opening,
- means (15, 16, 115, 116, 215, 216, 315, 316) for determining a parameter characteristic of a portion of the product to be spread disposed proximate to said opening, and
- means (12) for adjusting an opening surface (S) adapted to control displacement of said sealing means (9) to adjust the opening surface of said opening with respect to said parameter characteristic,
said moving belt speed (Vt) adjusting means being adapted to adjust the speed of said moving belt with respect to said opening surface and a desired mass flow (Dmt) predefined by the product to be spread.

2. Spreader according to Claim 1, **characterised in that** said parameter characteristic is relative to the height of product proximate to said opening (7).

3. Spreader according to Claim 1, **characterised in that** said means for determining a parameter characteristic comprise means for measuring a force exerted by said product on said sealing means.

4. Spreader according to Claim 3, **characterised in that** said means of force measurement comprise a set of sensors (15, 16, 115, 116, 215, 216) comprising at least one sensor of the analogue type.

5. Spreader according to Claim 4, **characterised in that** said sealing means comprise a door (9) supported and held in position by means (10) for actuating the door connected to said case, said means of force measurement (15, 16) being adapted to measure a force (Fp) exerted on said actuating means.

6. Spreader according to Claim 4, **characterised in that** the sealing means comprise a door (109) slidingly mounted in slides (126) integral with said case, the means of force measurement (115, 116) being adapted to measure a force (Fp2) exerted by said door on said slides.

7. Spreader according to Claim 4, **characterised in that** the sealing means comprise a door (209), the lower part of the door comprising a hinged device (230), said door comprising a sensor support (231) adapted to block a rotation of said hinged device, said means of force measurement (215, 216) being adapted to measure a force (Fp3) exerted by said product to be spread on said hinged device.

8. Spreader according to Claim 3, **characterised in that** said means of force measurement (315, 316) comprise a set of sensors comprising at least one sensor of the boolean type.

9. Spreader according to Claim 8, **characterised in that** the sealing means comprise a door (309), the lower part of the door comprising a hinged device (330), said door comprising a sensor support (331) adapted to block a rotation of said hinged device, a mechanical device (332) able to be compressed being arranged between said hinged device and said sensor support, said means of force measurement being adapted to transmit a signal, the value of which indicates if said mechanical device is compressed or not.

10. Spreader according to Claim 1, **characterised in that** it comprises memory means adapted to store the distance between said sealing means and scattering elements of the spreader, so that the adjustment of the speed (Vt) of the moving belt takes account of the difference between the moment of determining the parameter characteristic of a portion of the product and the moment of ejecting the portion of the product from the spreader.

11. Spreader according to Claim 1, **characterised in that** it comprises weighing means (20) adapted to weigh the product to be spread contained in the case (3) and entry means (22) to enter a volume (V) of product to be spread present in the case, the spreader comprising a control unit (17) adapted to determine the density (µ) of the product to be spread according to the mass of the product to be spread and the volume of the product to be spread.

12. Method for controlling the mass flow of a product to be spread (4) ejected from a spreader, said spreader comprising a case (3) intended to contain the product to be spread, said case comprising an opening (7) adapted to allow the ejection of said product to be spread from said case, said spreader comprising a moving belt (13), arranged in said case, adapted to move at least a portion of said product to be spread in the direction of said opening, and sealing means (9, 10, 109, 126, 209, 309) of the opening adapted to seal, at least partially, said opening, **characterised in that** it comprises the stages consisting of:
- determining a parameter characteristic of a portion of the product to be spread disposed proximate to said opening,
- controlling displacement of said sealing means to adjust the opening surface (S) of said opening with respect to said parameter characteristic, and
- adjusting the speed (Vt) of said moving belt with respect to said opening surface and a desired mass flow predefined by the product to be spread.

## Patentansprüche

1. Verteilmaschine mit einem Kasten (3), der dafür vorgesehen ist, ein zu verteilendes Produkt (4) zu enthalten, wobei der Kasten einen Öffnungsbereich (7) umfasst, der den Ausstoß des zu verteilenden Produktes aus dem Kasten zu ermöglichen geeignet ist, wobei die Verteilmaschine ein in dem Kasten angeordnetes Transportband (13), das mindestens einen Teil des zu verteilenden Produktes in Richtung des Öffnungsbereiches zu bewegen geeignet ist, und Einstellmittel für die Geschwindigkeit (Vt) des Transportbandes umfasst, die die Geschwindigkeit des Transportbandes einzustellen geeignet sind, **dadurch gekennzeichnet, dass** sie
- Verschlussmittel (9, 10, 109, 126, 209, 309) für den Öffnungsbereiches, die den Öffnungsbereich mindestens teilweise zu verschließen geeignet sind,
- Mittel zur Bestimmung (15, 16, 115, 116, 215, 216, 315, 316) einer Kenngröße eines in der Nähe des Öffnungsbereiches angeordneten Teils des zu verteilenden Produktes und
- Einstellmittel (12) für eine Öffnungsfläche (S), die eine Bewegung der Verschlussmittel (9) zu steuern geeignet sind, um die Öffnungsfläche des Öffnungsbereiches in Abhängigkeit von der Kenngröße einzustellen,
umfasst, wobei die Einstellmittel für die Geschwindigkeit (Vt) des Transportbandes die Geschwindigkeit des Transportbandes in Abhängigkeit von der Öffnungsfläche und einem gewünschten, vorbestimmten Massenstrom (Dmt) des zu verteilenden Produktes einzustellen geeignet sind.

2. Verteilmaschine nach Anspruch 1, **dadurch gekennzeichnet, dass** die Kenngröße von der Produkthöhe in der Nähe des Öffnungsbereiches (7) abhängig ist.

3. Verteilmaschine nach Anspruch 1, **dadurch gekennzeichnet, dass** die Kenngrößenbestimmungsmittel Kraftmessmittel zur Messung einer von dem Produkt auf die Verschlussmittel ausgeübten Kraft umfassen.

4. Verteilmaschine nach Anspruch 3, **dadurch gekennzeichnet, dass** die Kraftmessmittel eine Anordnung von Messwertgebern (15, 16, 115, 116, 215, 216) umfassen, die mindestens einen analogen Messwertgeber umfassen.

5. Verteilmaschine nach Anspruch 4, **dadurch gekennzeichnet, dass** die Verschlussmittel eine Tür (9) umfassen, die von mit dem Kasten verbundenen Betätigungsmitteln (10) der Tür getragen und in Position gehalten werden, wobei die Kraftmessmittel (15, 16) eine auf die Betätigungsmittel ausgeübte Kraft (Fp) zu messen geeignet sind.

6. Verteilmaschine nach Anspruch 4, **dadurch gekennzeichnet, dass** die Verschlussmittel eine Tür (109) umfassen, die verschiebbar in an dem Kasten befestigten Schienen (126) eingebaut ist, wobei die Kraftmessmittel (115, 116) eine von der Tür auf die Schienen ausgeübte Kraft (Fp2) zu messen geeignet sind.

7. Verteilmaschine nach Anspruch 4, **dadurch gekennzeichnet, dass** die Verschlussmittel eine Tür (209) umfassen, wobei der untere Teil der Tür eine Gelenkvorrichtung (230) umfasst, wobei die Tür eine Messwertgeberhalterung (231) umfasst, die eine Drehung der Gelenkvorrichtung zu sperren geeignet ist, wobei die Kraftmessmittel (215, 216) eine von dem zu verteilenden Produkt auf die Gelenkvorrichtung ausgeübte Kraft (Fp3) zu messen geeignet ist.

8. Verteilmaschine nach Anspruch 3, **dadurch gekennzeichnet, dass** die Kraftmessmittel (315, 316) eine Anordnung von Messwertgebern umfassen, die mindestens einen booleschen Messwertgeber umfassen.

9. Verteilmaschine nach Anspruch 8, **dadurch gekennzeichnet, dass** die Verschlussmittel eine Tür (309) umfassen, wobei der untere Teil der Tür eine Gelenkvorrichtung (330) umfasst, wobei die Tür eine Messwertgeberhalterung (331) umfasst, die eine Drehung der Gelenkvorrichtung zu sperren geeignet ist, wobei zwischen der Gelenkvorrichtung und der Messwertgeberhalterung eine mechanische Vorrichtung (332), die gestaucht zu werden geeignet ist, angeordnet ist, wobei die Kraftmessmittel ein Signal zu übertragen geeignet sind, dessen Wert anzeigt, ob die mechanische Vorrichtung gestaucht ist oder nicht.

10. Verteilmaschine nach Anspruch 1, **dadurch gekennzeichnet, dass** sie Speichermittel umfasst, die den Abstand zwischen den Verschlussmitteln und den Streuelementen der Verteilmaschine zu speichern geeignet sind, so dass bei der Einstellung der Geschwindigkeit (Vt) des Transportbandes der Versatz zwischen dem Moment der Bestimmung der Kenngröße eines Teils des Produktes und dem Moment des Ausstoßes des Teils des Produktes aus der Verteilmaschine berücksichtigt wird.

11. Verteilmaschine nach Anspruch 1, **dadurch gekennzeichnet, dass** sie Wiegemittel (20), die das in dem Kasten (3) enthaltene zu verteilende Produkt zu wiegen geeignet sind, und Eingabemittel (22) für die Eingabe eines Volumens (V) des in dem Kasten befindlichen zu verteilenden Produktes umfasst, wobei die Verteilmaschine eine Steuereinheit (17) umfasst, die die Dichte (µ) des zu verteilenden Produktes in Abhängigkeit von der Masse des zu verteilenden Produktes und dem Volumen des zu verteilenden Produktes zu bestimmen geeignet ist.

12. Verfahren zur Steuerung des Massenstromes eines zu verteilenden Produktes (4), das aus einer Verteilmaschine ausgestoßen wird, wobei die Verteilmaschine einen Kasten (3) umfasst, der dafür vorgesehen ist, das zu verteilende Produkt zu enthalten, wobei der Kasten einen Öffnungsbereich (7) umfasst, der den Ausstoß des zu verteilenden Produktes aus dem Kasten zu ermöglichen geeignet ist, wobei die Verteilmaschine ein in dem Kasten angeordnetes Transportband (13), das mindestens einen Teil des zu verteilenden Produktes in Richtung des Öffnungsbereiches zu bewegen geeignet ist, und Verschlussmittel (9, 10, 109, 126, 209, 309) des Öffnungsbereiches umfasst, die den Öffnungsbereich mindestens teilweise zu verschließen geeignet sind, **dadurch gekennzeichnet, dass** er Phasen umfasst, die darin bestehen,
- eine Kenngröße eines in der Nähe des Öffnungsbereiches angeordneten Teils des zu verteilenden Produktes zu bestimmen,
- eine Bewegung der Verschlussmittel zu steuern, um die Öffnungsfläche (S) des Öffnungsbereiches in Abhängigkeit von der Kenngröße einzustellen, und
- die Geschwindigkeit (Vt) des Transportbandes in Abhängigkeit von der Öffnungsfläche und einem gewünschten, vorbestimmten Massenstrom (Dmt) des zu verteilenden Produktes einzustellen.
